Europäisches Patentamt

European Patent Office

Office européen des brevets

(19)

(11) EP 1 213 780 A2

(12) **EUROPEAN PATENT APPLICATION**

(43) Date of publication:
12.06.2002 Bulletin 2002/24

(51) Int Cl.⁷: **H01M 8/24**, H01M 8/02

(21) Application number: 01129430.3

(22) Date of filing: 10.12.2001

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **11.12.2000 JP 2000375695**

(71) Applicant: **TOYOTA JIDOSHA KABUSHIKI
KAISHA
Aichi-ken 471-8571 (JP)**

(72) Inventors:
• **Sano, Seiji**
**Toyota-shi, Aichi-ken, 471-8571 (JP)**
• **Tsugane, Takahide**
**Toyota-shi, Aichi-ken, 471-8571 (JP)**
• **Taniguchi, Takumi**
**Toyota-shi, Aichi-ken, 471-8571 (JP)**

• **Hamada, Hitoshi**
**Toyota-shi, Aichi-ken, 471-8571 (JP)**
• **Matsumoto, Shinichi**
**Toyota-shi, Aichi-ken, 471-8571 (JP)**
• **Takahashi, Tsuyoshi**
**Toyota-shi, Aichi-ken, 471-8571 (JP)**
• **Yixin, Zeng**
**Toyota-shi, Aichi-ken, 471-8571 (JP)**
• **Asai, Yasuyuki**
**Toyota-shi, Aichi-ken, 471-8571 (JP)**
• **Suzuki, Toshiyuki**
**Toyota-shi, Aichi-ken, 471-8571 (JP)**

(74) Representative:
**Leson, Thomas Johannes Alois, Dipl.-Ing.
Tiedtke-Bühling-Kinne & Partner GbR,
TBK-Patent,
Bavariaring 4
80336 München (DE)**

(54) **Fuel cell stack with polymer electrolyte**

(57)      A fuel cell (10) wherein (a) an MEA and a separator (18) are layered in a direction perpendicular to gravity, and (b) a fuel gas inlet (27b), a fuel gas outlet (27c) and a fuel gas passage (27a), and an oxidant gas inlet (28b), an oxidant gas outlet (28c) and an oxidant gas passage (28a) are arranged such that a humidity distribution of fuel gas at an anode (14) and a humidity distribution of oxidant gas at a cathode (17) are counter to each other. The fuel cell (10) has a coolant passage (26), and the humidity distribution and a temperature distribution at the cathode (17) correspond to each other. Each gas passage (27a, 28a) has a concave portion (29) at a lower wall thereof.

FIG. 2

EP 1 213 780 A2

Printed by Jouve, 75001 PARIS (FR)

## Description

The present invention relates to a fuel cell. More particularly, the present invention relates to a structure of reactant gas passages of the fuel cell which can make water distribution in the fuel cell uniform.

A fuel cell (for example, a polymer electrolyte fuel cell) includes a membrane-electrode assembly (MEA), a diffusion layer, and a separator. The MEA includes an electrolyte membrane and a pair of electrodes disposed on opposite sides of the electrolyte membrane. The pair of electrodes include an anode provided on one side of the membrane and constructed of a first catalyst layer, and a cathode provided on the other side of the membrane and constructed of a second catalyst layer. A first diffusion layer is provided between the first catalyst layer and the separator, and a second diffusion layer is provided between the second catalyst layer and the separator. The separator has a passage formed therein for supplying fuel gas (hydrogen) to the anode and a passage formed therein for supplying oxidant gas (oxygen, usually, air) to the cathode. A module is constructed of at least one layer of a fuel cell. A number of modules are layered, and electrical terminals, electrical insulators, and end plates are disposed at opposite ends of the pile of modules to construct a stack of fuel cells. After tightening the stack of fuel cells between the opposite end plates in a fuel cell stacking direction, the end plates are coupled to a fastening member (for example, a tension plate), extending in a fuel cell stacking direction outside the pile of fuel cells, by bolts.

In the fuel cell, at the anode, hydrogen is changed to positively charged hydrogen ions (i.e., protons) and electrons. The hydrogen ions move through the electrolyte membrane to the cathode where the hydrogen ions react with supplied oxygen and electrons (which are generated at an anode of the adjacent MEA and move to the cathode of the instant MEA through a separator, or which are generated at an anode of the MEA located at one end of the pile of fuel cells and move to the cathode of the MEA located at the other end of the pile of the fuel cells through an outer electrical circuit) to form water, as follows:

$$\text{At the anode:} \quad H_2 \rightarrow 2H^+ + 2e^-$$

$$\text{At the cathode:} \quad 2H^+ + 2e^- + (1/2)O_2 \rightarrow H_2O$$

A coolant passage is formed in the separator and coolant (usually, water) is caused to flow to cool the fuel cell which is heated by heat generated at the above water product reaction and Julean heat.

In order for electrons to move in the electrolyte membrane and for the above reaction to be normally conducted, the electrolyte membrane has to contain a certain amount of water therein. Further, in order for a normal power generation reaction to be conducted in the entirety of the power generating area of the electrolyte membrane, water distribution in the fuel cell plane has to be uniform. This is because if the water distribution is non-uniform and the membrane becomes locally dry, the above reaction can no longer be obtained, and if flooding is locally caused due to the produced water, the supply of the oxidant gas to the cathode will be blocked by the water.

The oxidant gas is dry near the oxidant gas inlet, is gradually wetted along the oxidant gas flow, and is likely to subject to flooding near the oxidant gas outlet. Since water permeates through the electrolyte membrane from the oxidant gas to the fuel gas, the fuel gas is more wetted near the fuel gas outlet than near the fuel gas inlet. Usually, in order to prevent drying-out near the reactant gas inlets, both fuel gas and the oxidant gas are humidified outside the fuel cell and then supplied to the gas passages.

Japanese Patent Publication No. HEI 7-320755 discloses a fuel cell where a fuel gas flow and an oxidant gas flow disposed on opposite sides of an MEA are counterflow for uniforming a humidity distribution at the fuel cell plane. In the fuel cell, two cooling systems having different coolant temperatures are provided for a high-temperature portion and a low-temperature portion in the cell, and the fuel gas is caused to flow from the high-temperature portion to the low-temperature portion thereby making the fuel gas wetter near the fuel gas outlet. By this structure, the electrolyte membrane is humidified near the fuel gas outlet by water contained in the fuel gas, and the water permeates through the membrane to the oxidant gas thereby humidifying the membrane and the oxidant gas near the oxidant gas inlet.

However, with the above conventional fuel cell, there are the following problems:

First, since the fuel cell plane or the fuel cell stacking direction is not specified, if the stacking direction is a vertical direction and the fuel cell plane is directed in a horizontal direction, water cannot be smoothly exhausted. Once flooding is caused, the water will cover the entire surface of the fuel cell plane, and air will not be supplied sufficiently to the cathode. Second, since the two cooling systems having different temperatures have to be provided in the fuel cell plane, design for the coolant passages is very complicated and difficult. Since design for the reactant gas passages has a close relationship with the design for the coolant passage, a degree of freedom for the design of the reactant gas passages is small. For example, if a U-turn portion is provided to the fuel gas passage, the temperature of the fuel gas will change from a high temperature to a low temperature, and then the low temperature to a high temperature again, which will make the cooling design very complicated, and in some cases, impossible.

An object of the present invention is to provide a fuel cell where a humidity distribution at an electrolyte membrane is uniformed and product water can be smoothly exhausted from the fuel cell.

Another object of the present invention is to provide a fuel cell where a humidity distribution at an electrolyte membrane is uniform, produced water can be smoothly exhausted from the fuel cell, and a single cooling system is provided, whereby the humidity distribution is further uniformed.

The above and other objects, features, and advantages of the present invention will become apparent and will be more readily appreciated from the following detailed description of the preferred embodiments of the present invention in conjunction with the accompanying drawings.

FIG. 1 is a front elevational view of a fuel cell applicable to any embodiment of the present invention.

FIG. 2 is an enlarged, cross-sectional view of one portion of the fuel cell of FIG. 1 applicable to any embodiment of the present invention.

FIG. 3 is a front elevational view of a fuel gas passage and an oxidant gas passage at different fuel cell planes of a fuel cell according to a first embodiment of the present invention.

FIG. 4 is a front elevational view of a fuel gas passage, an oxidant gas passage, and a coolant passage at different fuel cell planes of a fuel cell according to the first embodiment of the present invention.

FIG. 5 is an enlarged, cross-sectional view of a first portion of a fuel cell including a fuel gas passage and a second portion of the fuel cell including an oxidant gas passage according to a second embodiment of the present invention.

FIG. 6 is a front elevational view of a fuel cell plane including a fuel gas passage or an oxidant gas passage according to a third embodiment of the present invention.

FIG. 7 is a front elevational view of a fuel gas passage, an oxidant gas passage, and a coolant passage at different fuel cell planes of a fuel cell according to a fourth embodiment of the present invention.

FIG. 8 is a front elevational view of a fuel gas passage, an oxidant gas passage, and a coolant passage at different fuel cell planes of a fuel cell according to a fifth embodiment of the present invention.

FIG. 9 is a front elevational view of a fuel gas passage, an oxidant gas passage, and a coolant passage at different fuel cell planes of a fuel cell according to a sixth embodiment of the present invention.

FIG. 10 is a front elevational view of a fuel gas passage, an oxidant gas passage, and a coolant passage at different fuel cell planes of a fuel cell according to a seventh embodiment of the present invention.

FIG. 11 is a front elevational view of a fuel gas passage, an oxidant gas passage, and a coolant passage at different fuel cell planes of a fuel cell according to an eighth embodiment of the present invention.

FIG. 12 is a front elevational view of a fuel gas passage, an oxidant gas passage, and a coolant passage at different fuel cell planes of a fuel cell according to a ninth embodiment of the present invention.

FIG. 13 is a front elevational view of a fuel gas passage, an oxidant gas passage, and a coolant passage at different fuel cell planes of a fuel cell according to a tenth embodiment of the present invention.

FIG. 14 is a front elevational view of a fuel gas passage, an oxidant gas passage, and a coolant passage at different fuel cell planes of a fuel cell according to an eleventh embodiment of the present invention.

FIG. 15 is a front elevational view of a fuel gas passage, an oxidant gas passage, and a coolant passage at different fuel cell planes of a fuel cell according to a twelfth embodiment of the present invention.

FIG. 16 is a front elevational view of a fuel gas passage, an oxidant gas passage, and a coolant passage at different fuel cell planes of a fuel cell according to a thirteenth embodiment of the present invention.

FIG. 17 is a front elevational view of a fuel gas passage, an oxidant gas passage, and a coolant passage at different fuel cell planes of a fuel cell according to a fourteenth embodiment of the present invention.

FIG. 18 is a front elevational view of a fuel gas passage, an oxidant gas passage, and a coolant passage at different fuel cell planes of a fuel cell according to a fifteenth embodiment of the present invention.

FIG. 19 is a front elevational view of a fuel gas passage, an oxidant gas passage, and a coolant passage at different fuel cell planes of a fuel cell according to a sixteenth embodiment of the present invention.

FIG. 20 is a front elevational view of a fuel gas passage, an oxidant gas passage, and a coolant passage at different fuel cell planes of a fuel cell according to a seventeenth embodiment of the present invention.

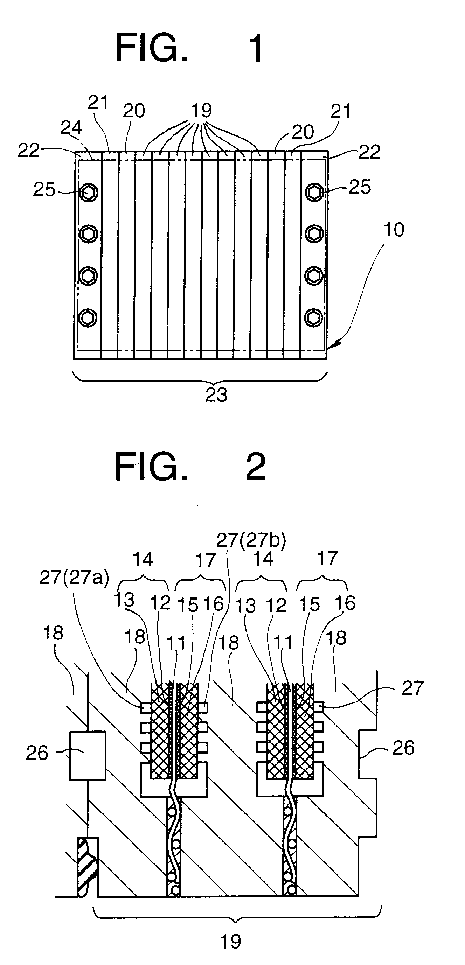

First, structures common to all embodiments of the present invention will be explained with reference to FIGS. 1 - 6.

A fuel cell 10 is of a polymer electrolyte-type. The fuel cell 10 may be mounted to, for example, a vehicle. However, the fuel cell 10 may be used for other purposes than for a vehicle.

As illustrated in FIGS. 1 and 2, the polymer electrolyte fuel cell 10 can include a membrane-electrode assembly (MEA), a diffusion layer, and a separator. The MEA can include an electrolyte membrane 11 and a pair of electrodes 14, 17 disposed on opposite sides of the electrolyte membrane 11. The pair of electrodes 14, 17 can include an anode 14 provided on one side the membrane 11 and constructed of a first catalyst layer 12 and a cathode 17 provided on the other side of the membrane 11 and constructed of a second catalyst layer 15. A first diffusion layer 13 may be provided between the first catalyst layer 12 and the separator 18, and a second diffusion layer 16 may be provided between the second catalyst layer 15 and the separator 18. The separator 18 disposed on an anode side of the MEA has a first reactant gas passage 27 formed therein for supplying fuel gas (hydrogen) to the anode 14. The separator disposed on a cathode side of the MEA has a second reactant gas passage 28 formed therein for supplying oxidant gas (oxygen, usually, air) to the cathode 17. A coolant passage 26 is formed in the separator 18. A module 19 is constructed of at least one layer of fuel cells. A number of modules 19 can be layered together, and electrical terminals 20, electrical insulators 21, and end plates 22 can be disposed at opposite ends of the pile of modules to construct a stack 23 of fuel cells. After tightening the stack 23 of fuel cells 23 between the opposite end plates 22 in a fuel cell stacking direction, the end plates 22 can be coupled to a fastening member 24 (for example, a tension plate) extending in a fuel cell stacking direction outside the pile of fuel cells by bolts 25.

The coolant passage 26 is provided per fuel cell or per a plurality of fuel cells, for example, per two fuel cells. A coolant (cooling water) flows in the coolant passage 26 and cools the fuel cell, the temperature of which rises due to the heat generated at the water production reaction and a Joulean heat.

The separator 18 operates to separate the hydrogen and the air from each other, to separate the hydrogen and cooling water from each other, and to separate the air and cooling water from each other. The separator 18 operates also as an electric current passage between the individual cells connected in series.

The separator 18 can be non-permeable with respect to gas and water, and has electric conductivity. The separator 18 can be made from carbon, metal, or synthetic resin, and a given conductivity can be achieved by mixing the resin with conductive particles or fibers such as carbon black. The separator can be a carbon or synthetic resin plate having a reactant gas passage 27, 28 formed therein and a metal plate having convex and concave portions stamped therein.

Each reactant gas passage 27, 28 can be a single grooved passage formed in the carbon or synthetic resin plates, a group of a plurality of grooved passages parallel to each other formed in the carbon or synthetic resin plates, or a space formed between two metal plates spaced from each other by a plurality of convex portions stamped in the metal plates.

As illustrated in FIGS. 1 - 6, the reactant gas passages 27 can include a fuel gas passage 27a formed at a power generating area of the fuel cell, a fuel gas inlet 27b through which fuel gas is supplied to the fuel gas passage 27a, and a fuel gas outlet 27c through which fuel gas which has not been consumed at the fuel gas passage 27a goes out.

Similarly, the reactant gas passages 28 can include an oxidant gas passage 28a formed at the power generating area of the fuel cell, an oxidant gas inlet 28b through which oxidant gas is supplied to the oxidant gas passage 28a, and an oxidant gas outlet 28c through which oxidant gas which has not been consumed at the oxidant gas passage 28a goes out.

The fuel gas passage 27a and the oxidant gas passage 28a are located on opposite sides with respect to the MEA.

A stacking direction of the stack 23 of fuel cells is perpendicular to a gravity operating direction so that a cell plane is directed in the vertical direction.

The fuel gas inlet 27b, the fuel gas outlet 27c and the fuel gas passage 27a, and the oxidant gas inlet 28b, the oxidant gas outlet 28c and the oxidant gas passage 28a are arranged so that a humidity distribution of the fuel gas at the anode 14 and a humidity distribution of the oxidant gas at the cathode 17 are counter to each other. The humidity of the oxidant gas becomes larger along an oxidant gas flow direction and becomes largest at the most downstream portion of the oxidant gas passage 28a due to water produced by the reaction. The humidity of the hydrogen becomes larger along a fuel gas flow direction and becomes largest at the downstream end of the fuel gas passage 27a due to water permeating through the membrane 11 from the oxidant gas passage 28a to the fuel gas passage 27a.

The fuel gas passage 27a and the oxidant gas passage 28a are parallel to each other. An upstream portion of the fuel gas passage 27a (a portion located upstream of an intermediate point of the fuel gas passage) and a downstream portion of the oxidant gas passage 28a (a portion located downstream of an intermediate point of the oxidant gas passage) are arranged so as to correspond to each other via the MEA in the stacking direction of fuel cells.

The coolant passage 26 is arranged and a flow direction of the coolant is selected such that a humidity distribution of the oxidant gas at the cathode 17 and a temperature distribution at the cathode 17 correspond to each other. For example, in a case where the number of U-turns of the coolant passage 26 and the number of U-turns of the oxidant gas passage 28 are equal, the coolant passage 26 and the oxidant gas passage 28 are arranged to be parallel to each other and the coolant and the oxidant gas are caused to flow in the same direction.

In the vertical cell plane, each of the fuel gas passage 27a and the oxidant gas passage 28a extends horizontally or obliquely downwardly in the downstream direction. The coolant is caused to flow from a lower portion of the cell to an upper portion of the cell so that bubbles in the coolant rise and escape through the coolant outlet.

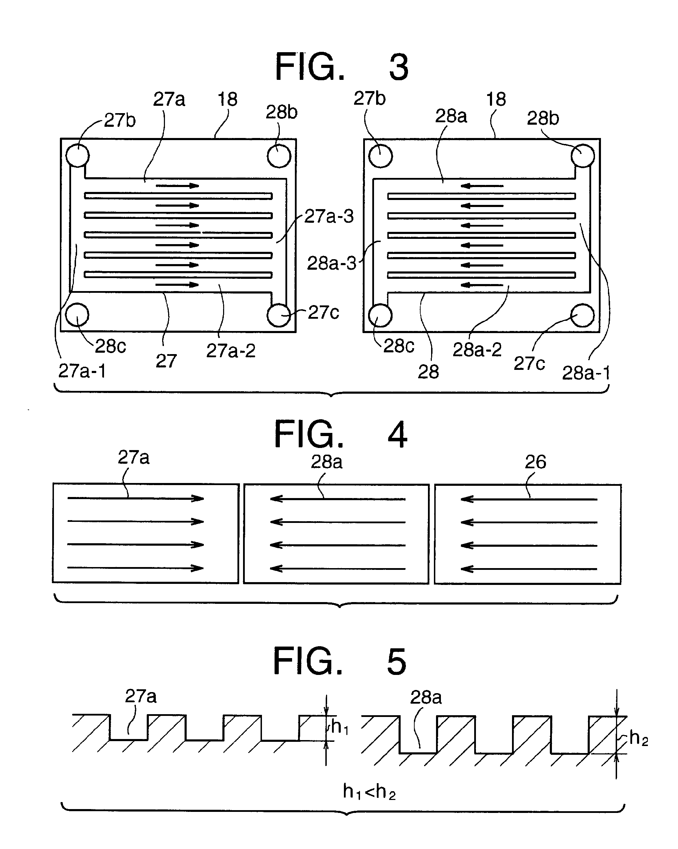

As illustrated in FIG. 5, a groove depth ($h_1$) of the fuel gas passage 27a is smaller than a groove depth ($h_2$) of the oxidant gas passage 28a. A groove width of the fuel gas passage 27a is substantially equal to a groove width of the oxidant gas passage 28a. Due to this structure, the gas flow speed of the fuel gas is made higher than a case where both have the same groove depth.

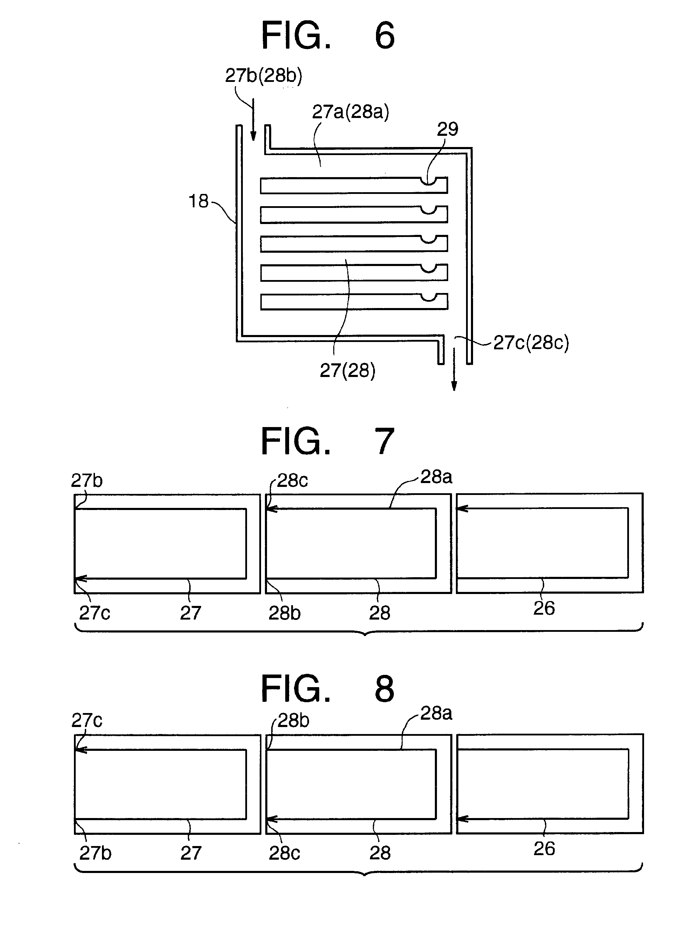

As illustrated in FIG. 6, a concave portion 29 for temporarily collecting the product water therein can be formed in a lower wall of a passage portion of each of the fuel gas passage 27 and the oxidant gas passage 28 close to the gas outlet 27c, 28c.

Effects or technical advantages due to the above structures applicable to all embodiments of the present invention will be explained.

Since the cell plane is directed vertically, even if flooding is caused in the gas passages 27 and 28, the water will flow to lower portions of the gas passages 27 and 28 and will be exhausted. As a result, there is no possibility that the entireties of the gas passages 27 and 28 are blocked by the water.

Since the humidity distribution of the fuel gas at the anode and the humidity distribution of the oxidant gas at the cathode are counter to each other, water permeates through the membrane 11 from the portion of the oxidant gas passage 28a near the oxidant gas outlet 28c to the portion of the fuel gas passage 27a near the fuel gas inlet 27b and from the portion of the fuel gas passage 27a near the fuel gas outlet 27c to the portion of the oxidant gas passage 28a near the oxidant gas inlet 28b. As a result, the water circulates in the cell, so that water distribution becomes uniform and the flooding of the gas passages is prevented.

Since the fuel gas passage 27a and the oxidant gas passage 28a are located on opposite sides of the MEA are parallel to each other and the upstream portion of the fuel gas passage 27a corresponds to the downstream portion of the oxidant gas passage 28a and the downstream portion of the fuel gas passage 27a corresponds to the upstream portion of the oxidant gas passage 28a, water permeates through the membrane 11 from the downstream portion of the oxidant gas passage 28a to the upstream portion of the fuel gas passage 27a and from the downstream portion of the fuel gas passage 27a to the upstream portion of the oxidant gas passage 28a. As a result, the water circulates in the cell, so that water distribution becomes uniform and the flooding of the gas passages is prevented.

Since the humidity distribution corresponds to the temperature distribution at the cathode and the coolant flows parallel to the oxidant gas and in the same direction as the oxidant gas, (1) near the oxidant gas inlet 28b, the oxidant gas is cooled by the coolant of a relatively low temperature so that the saturation vapor pressure of the oxidant gas is low (the relative humidity is high) and drying-out of the membrane near the oxidant gas inlet is prevented, and (2) near the oxidant gas outlet 28c, the oxidant gas is cooled by the coolant of a relatively high temperature so that the saturation vapor pressure of the oxidant gas is high (the relative humidity is low) and flooding near the oxidant gas outlet is prevented. This is achieved in a single cooling system by adopting the above structure. Therefore, the conventional two cooling systems of different coolant temperatures do not need to be provided for achieving the above technical advantage. Due to the single cooling system, the degree of freedom for design of both the coolant passage and the gas passages becomes large, and it becomes possible to provide a gas passage having a U-turn and a serpentine gas passage.

Since each of the fuel gas passage 27a and the oxidant gas passage 28a extends horizontally or downwardly in a downstream direction, even if water is produced in the gas passage, the water can flow to a lower portion of the gas passage by gravity. When the coolant flows upwardly in the coolant passage 26, even if bubbles exist in the coolant passage, the bubbles will move upwardly due to buoyancy and will be exhausted through the coolant outlet.

Since the groove depth ($h_1$) of the fuel gas passage 27a is smaller than the groove depth ($h_2$) of the oxidant gas passage 28a, the flow speed of the fuel gas is high, so that the boundary layer of the fuel gas is thin and water in the membrane 11 is likely to be evaporated into the fuel gas. As a result, the amount of water permeating through the membrane 11 from the downstream portion of the oxidant gas passage 28a to the upstream portion of the fuel gas passage 27 increases, and the humidity of the fuel gas increases, which suppresses drying-out of the membrane 11.

Since the concave portion 29 is formed in the lower wall of the portion of the gas passage 27a, 28a near the gas outlet 27c, 28c, even if water is produced in the oxidant gas passage 28, it will collect in the concave portion 29 and blockage of the passage by water will be prevented. When water in the fuel gas passage 27 collects in the concave portion 29, it will suppress drying-out of the membrane 11 near the oxidant gas inlet.

The following structures can be adopted in some, but not all, of the embodiments of the present invention:

The fuel gas passage 27a and the oxidant gas passage 28a located on opposite sides of the MEA can be arranged such that the fuel gas flow and the oxidant gas flow are counter to each other over the entire portions of the fuel gas passage 27a and the oxidant gas passage 28a. This structure will be adopted in the first through eleventh embodiments of the present invention.

The fuel gas passage 27a and the oxidant gas passage 28a located on opposite sides of the MEA can be arranged such that the fuel gas flow and the oxidant gas flow are parallel to each other and are directed in the same direction and such that the upstream portion of the fuel gas passage 27a corresponds to the downstream portion of the oxidant gas passage 28a and the downstream portion of the fuel gas passage 27a corresponds to the upstream portion of the oxidant gas passage 28a. This structure will be adopted in the twelfth through fifteenth embodiments of the present invention.

As illustrated in FIG. 3, the fuel gas inlet 27b can be located at an upper portion of the fuel gas passage 27, and the oxidant gas inlet 28b can be located at an upper portion of the oxidant gas passage 28. The fuel gas outlet 27c can be located at a lower portion of the fuel gas passage 27a, and the oxidant gas outlet 28c can be located at a lower portion of the oxidant gas passage 28a. This arrangement is preferable from the viewpoint of exhaust of water. This structure will be adopted in the first and third embodiments of the present invention.

One group of the fuel gas passage 27a and one group of the oxidant gas passage 28a can be provided in one fuel cell. This structure will be adopted in the first, third through fifth, eighth, ninth, twelfth, and thirteenth embodiments of the present invention.

A plurality of groups of the fuel gas passages 27a and a plurality of groups of the oxidant gas passages 28a can be provided in one fuel cell. In the case where a plurality of groups of the fuel gas passages 27a and a plurality of groups of the oxidant gas passages 28a are provided in one fuel cell, the number of the groups of the fuel gas passages 27a and the number of the groups of the oxidant gas passage 28a are equal to each other, and in each group, the fuel gas passage 27a and the oxidant gas passage 28a are arranged so as to correspond to each other. This structure will be adopted in the sixth, seventh, fourteenth, and fifteenth embodiments of the present invention.

The fuel gas passage 27a and the oxidant gas passage 28a can have no U-turn portion. This structure will be adopted in the first and third embodiments.

The fuel gas passage 27a can have a bent portion (a 90° or 180° bent portion, and the 180° bent portion constitutes a U-turn portion). Similarly, the oxidant gas passage 28a can have a bent portions (a 90° or 180° bent portion, and the 180° bent portion constitutes a U-turn portion). Both the fuel gas passage 27a and the oxidant gas passage 28a can have a U-turn portion. The number of the U-turn portions in each passage can be one or more. When the number of the U-turn portions is two or more, the gas passage will be serpentine. The structures provided with the U-turn portions will be adopted in the fourth through fifteenth embodiments of the present invention.

Effects or technical advantages of the above structures that can be adopted in some, but not all, of the embodiments of the present invention will be explained.

In the case where the fuel gas flow and the oxidant gas flow are counter over the entire lengths thereof, since the wettest portion of one gas corresponds to the driest portion of the other gas, water can permeate most effectively from the oxidant gas to the fuel gas through the membrane 11 at the upstream portion of the fuel gas passage 27a and from the fuel gas to the oxidant gas through the membrane 11 at the downstream portion of the fuel gas passage 27a. As a result, water circulates in the fuel cell, and both drying-out of the membrane 11 and flooding are prevented.

In the case where the fuel gas flow and the oxidant gas flow are parallel to each other and are directed in the same direction near the gas inlets and the gas outlets and where the upstream portion and the downstream portion of the fuel gas passage 27a correspond to the downstream portion and the upstream portion of the oxidant gas passage 28a, respectively, since water circulates in the fuel cell as explained above, both drying-out of the membrane 11 and flooding are prevented.

In the case where gas inlets 27b, 28b are located at the upper portions of the gas passages 27a, 28a, respectively, and the gas outlets 27c, 28c are located at the lower portions of the gas passages 27a, 28a, respectively, since the gas flow directions in the gas passages 27a, 28a coincide with the water flow direction due to gravity, water can flow smoothly to the gas outlets through which the water is exhausted and flooding is effectively suppressed.

In the case where one group of the fuel gas passage 27a and one group of the oxidant gas passage 28a are provided in one fuel cell, design and manufacture of the gas passages are simplified.

In the case where a plurality of groups of the fuel gas passages 27a and a plurality of groups of the oxidant gas passages 28a are provided in one fuel cell, since the gas inlets 27b, 28b can be located close to the gas outlets 27c, 28c of the respective gases, water diffusion in a direction parallel to the cell plane through the membrane 11 can be conducted between the gas inlets 27b, 28b and the gas outlets 27c, 28c, and water distribution in the cell is more uniformed.

In the case where the gas passages 27a, 28a have no U-turn portions, design and manufacture of the gas passages 27a, 28a are simplified.

In the case where the gas passages 27a, 28a have one or more U-turn portions, since the gas inlets 27b, 28b can be located close to the gas outlets 27c, 28c of the respective gases, water diffusion in the cell plane through the membrane 11 can be conducted between the gas inlets 27b, 28b and the gas outlets 27c, 28c, and water distribution in the cell is more uniform.

Next, structures and effects or technical advantages relating to each embodiment of the present invention will be explained.

First Embodiment

In the first embodiment of the present invention, as illustrated in FIGS. 3 and 4, the fuel gas flow and the oxidant gas flow on opposite sides of the MEA are counter to each other over the substantially entire length of the gas flow passages.

The fuel gas inlet 27b and the oxidant gas inlet 28b are located at the upper portions of the fuel gas passage 27a and the oxidant gas passage 28a, respectively, and the fuel gas outlet 27c and the oxidant gas outlet 28c are located at the lower portions of the fuel gas passage 27a and the oxidant gas passage 28a, respectively.

The gas passages include one group of the fuel gas passage 27a and one group of the oxidant gas passage 28a.

Each of the fuel gas passage 27a and the oxidant gas passage 28a has a 90° bent portion but has no U-turn portion.

The fuel gas passage 27a includes an upstream side vertically extending portion $27a_{-1}$ connecting to the fuel gas inlet 27b, a plurality of horizontally or obliquely extending portions $27a_{-2}$ connecting to the portion $27a_{-1}$, and a downstream side vertically extending portion $27a_{-3}$ connecting to the portions $27a_{-2}$ and the fuel gas outlet 27c.

Similarly, the oxidant gas passage 28a includes an upstream side vertically extending portion $28a_{-1}$ connecting to the oxidant gas inlet 28b, a plurality of horizontally or obliquely extending portions $28a_{-2}$ connecting to the portion $28a_{-1}$, and a downstream side vertically extending portion $28a_{-3}$ connecting to the portions $28a_{-2}$ and the oxidant gas outlet 28c.

The same effects as those, already mentioned, common to all of the embodiments of the present invention are here obtained. More particularly, since the fuel gas flow and the oxidant gas flow are counter to each other, the wettest portion of one gas passage corresponds to the driest portion of the other gas passage and water circulation is effectively conducted. Further, since the coolant and the oxidant gas flow in parallel with each other, the oxidant gas is effectively cooled by the coldest water near the oxidant gas inlet 28b. As a result, the saturation vapor pressure is lowered near the oxidant gas inlet 28b, and drying-out of the membrane 11 near the oxidant gas inlet 28b is prevented. The oxidant gas is cooled by the water which has risen in temperature. As a result, the saturation vapor pressure is raised near the oxidant gas outlet 28c, and flooding near the oxidant gas outlet 28c is prevented.

Second Embodiment

In the second embodiment of the present invention, as illustrated in FIG. 5, the groove depth $h_1$ of the fuel gas passage 27a is smaller than the groove depth $h_2$ of the oxidant gas passage 28a.

By this structure, the flow speed of the fuel gas is made high. Therefore, the thickness of the boundary layer of the fuel gas is small, and water contained in the membrane 11 is likely to be evaporated to the fuel gas. As a result, the amount of water permeating through the membrane 11 from the downstream portion of the oxidant gas passage 28 to the fuel gas increases, and the humidity of the fuel gas increases whereby the drying-out of the membrane 11 is suppressed.

Third Embodiment

In the third embodiment of the present invention, as illustrated in FIG. 6, a concave portion 29 for temporarily collecting produced water is formed in the lower wall of the fuel gas passage 27a and the oxidant gas passage 28a near the gas outlets 27c, 28c.

Since the concave portion 29 is provided, even if a water drop occurs in the oxidant gas passage 28, the water will collect in the concave portion 29 and will not block the gas passage. When a water occurs caused in the fuel gas passage 27 and collects in the concave portion 29, the water will suppress drying-out of the membrane 11 near the oxidant gas inlet.

Fourth Embodiment

In the fourth embodiment of the present invention, as illustrated in FIG. 7, the fuel gas flow and the oxidant gas flow are counter to each other over the entire length of the passages 27a and 28a. The coolant flows in the same direction as the oxidant gas.

The fuel gas inlet 27b is located at the upper portion of the fuel gas passage 27a, and the fuel gas outlet 27c is located at the lower portion of the fuel gas passage 27a. The oxidant gas inlet 28b is located at the lower portion of the oxidant gas passage 28a, and the oxidant gas outlet 28c is located at the upper portion of the oxidant gas passage 28a.

The gas passages include one group of the fuel gas passage 27a and one group of the oxidant gas passage 28a.

Each of the fuel gas passage 27a and the oxidant gas passage 28a includes one U-turn portion.

The fuel gas inlet 27b and the oxidant gas inlet 28b are located at the same side of the fuel cell having a substantially rectangular configuration. The fuel gas outlet 27c and the oxidant gas outlet 28c are located at the same side of the rectangular fuel cell and at the same side as that where the fuel gas inlet 27b and the oxidant gas inlet 28b are located.

The effects or technical advantages of the fourth embodiment of the present invention are the same as those of the first embodiment of the present invention.

Fifth Embodiment

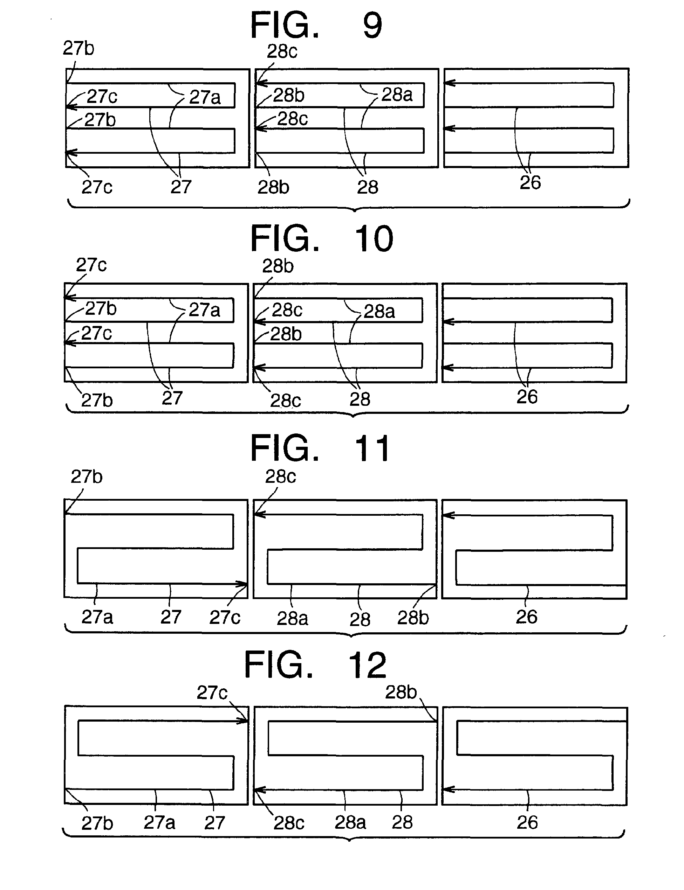

In the fifth embodiment, as illustrated in FIG. 8, the flow directions of the fuel gas, the oxidant gas and the coolant in the fifth embodiment of the present invention are reverse to those of the fuel gas, the oxidant gas and the coolant, respectively, in the fourth embodiment of the present invention. In the fifth embodiment, the fuel gas flow and the oxidant gas flow are counter to each other, and the coolant flows in the same direction as the oxidant gas.

The fuel gas inlet 27b is located at the lower portion of the fuel gas passage 27a, and the fuel gas outlet 27c is located at the upper portion of the fuel gas passage 27a. The oxidant gas inlet 28b is located at the upper portion of the oxidant gas passage 28a, and the oxidant gas outlet 28c is located at the lower portion of the oxidant gas passage 28a.

The gas passages include one group of the fuel gas passage 27a and one group of the oxidant gas passage 28a.

Each of the fuel gas passage 27a and the oxidant gas passage 28a includes one U-turn portion.

The fuel gas inlet 27b and the oxidant gas inlet 28b are located at the same side of the fuel cell having a substantially rectangular configuration. The fuel gas outlet 27c and the oxidant gas outlet 28c are located at the same side of the rectangular fuel cell and at the same side as that where the fuel gas inlet 27b and the oxidant gas inlet 28b are located.

The effects or technical advantages of the fifth embodiment of the present invention are the same as those of the first embodiment of the present invention.

Sixth Embodiment

In the sixth embodiment of the present invention, as illustrated in FIG. 9, the fuel gas flow and the oxidant gas flow are counter to each other. The coolant flows in the same direction as the oxidant gas.

The gas passages include a plurality of groups of the fuel gas passages 27 and a plurality of groups of the oxidant gas passages 28. FIG. 9 illustrates the example where two groups of the fuel gas passages and two groups of the oxidant gas passages are provided. The number of groups may be more than two.

In each group, the fuel gas inlet 27b is located at the upper portion of the fuel gas passage 27a, and the fuel gas outlet 27c is located at the lower portion of the fuel gas passage 27a. The oxidant gas inlet 28b is located at the lower portion of the oxidant gas passage 28a, and the oxidant gas outlet 28c is located at the upper portion of the oxidant gas passage 28a.

The fuel gas inlet 27b and the oxidant gas inlet 28b are located at the same side of the fuel cell having a substantially rectangular configuration. The fuel gas outlet 27c and the oxidant gas outlet 28c are located at the same side of the rectangular fuel cell and at the same side as that where the fuel gas inlet 27b and the oxidant gas inlet 28b are located.

Each of the fuel gas passages 27a and the oxidant gas passages 28a includes one U-turn portion.

The effects or technical advantages of the sixth embodiment of the present invention are the same as those of the first embodiment of the present invention.

Seventh Embodiment

In the seventh embodiment, as illustrated in FIG. 10, the flow directions of the fuel gas, the oxidant gas and the coolant in the seventh embodiment of the present invention are reverse to those of the fuel gas, the oxidant gas and the coolant, respectively, in the sixth embodiment of the present invention.

In the seventh embodiment of the present invention, the fuel gas flow and the oxidant gas flow are counter to each other. The coolant flows in the same direction as the oxidant gas.

The gas passages include a plurality of groups of the fuel gas passages 27 and a plurality of groups of the oxidant gas passages 28. FIG. 10 illustrates the example where two groups of the fuel gas passages and two groups of the oxidant gas passages are provided. The number of groups may be more than two.

In each group, the fuel gas inlet 27b is located at the lower portion of the fuel gas passage 27a, and the fuel gas outlet 27c is located at the upper portion of the fuel gas passage 27a. The oxidant gas inlet 28b is located at the upper portion of the oxidant gas passage 28a, and the oxidant gas outlet 28c is located at the lower portion of the oxidant gas passage 28a.

The fuel gas inlet 27b and the oxidant gas inlet 28b are located at the same side of the fuel cell having a substantially rectangular configuration. The fuel gas outlet 27c and the oxidant gas outlet 28c are located at the same side of the rectangular fuel cell and at the same side as that where the fuel gas inlet 27b and the oxidant gas inlet 28b are located.

Each of the fuel gas passages 27a and the oxidant gas passages 28a includes one U-turn portion.

The effects or technical advantages of the seventh embodiment of the present invention are the same as those of the first embodiment of the present invention.

Eighth Embodiment

In the eighth embodiment of the present invention, as illustrated in FIG. 11, the fuel gas flow and the oxidant gas flow are counter to each other over the entire length of the passages 27a and 28a. The coolant flows in the same direction as the oxidant gas.

The fuel gas inlet 27b is located at the upper portion of the fuel gas passage 27a, and the fuel gas outlet 27c is located at the lower portion of the fuel gas passage 27a. The oxidant gas inlet 28b is located at the lower portion of the oxidant gas passage 28a, and the oxidant gas outlet 28c is located at the upper portion of the oxidant gas passage 28a.

The fuel gas inlet 27b and the oxidant gas inlet 28b are located at the opposite sides of the fuel cell having a substantially rectangular configuration. The fuel gas outlet 27c and the oxidant gas outlet 28c are located at the opposite sides of the rectangular fuel cell.

The gas passages include one group of the fuel gas passage 27a and one group of the oxidant gas passage 28a.

Each of the fuel gas passage 27a and the oxidant gas passage 28a includes a plurality of U-turn portions and is serpentine. FIG. 11 illustrates that the number of the U-turn portions is two, but the number of the U-turn portions may be more than two.

The effects or technical advantages of the eighth embodiment of the present invention are the same as those of the first embodiment of the present invention.

Ninth Embodiment

In the ninth embodiment, as illustrated in FIG. 12, the flow directions of the fuel gas, the oxidant gas and the coolant are reverse to those of the fuel gas, the oxidant gas and the coolant, respectively, in the eighth embodiment of the present invention. In the ninth embodiment, the fuel gas flow and the oxidant gas flow are counter to each other, and the coolant flows in the same direction as the oxidant gas.

The fuel gas inlet 27b is located at the lower portion of the fuel gas passage 27a, and the fuel gas outlet 27c is located at the upper portion of the fuel gas passage 27a. The oxidant gas inlet 28b is located at the upper portion of the oxidant gas passage 28a, and the oxidant gas outlet 28c is located at the lower portion of the oxidant gas passage 28a.

The fuel gas inlet 27b and the oxidant gas inlet 28b are located at the opposite sides of the fuel cell having a substantially rectangular configuration. The fuel gas outlet 27c and the oxidant gas outlet 28c are located at the opposite sides of the rectangular fuel cell.

The gas passages include one group of the fuel gas passage 27a and one group of the oxidant gas passage 28a.

Each of the fuel gas passage 27a and the oxidant gas passage 28a includes a plurality of U-turn portions and is serpentine. FIG. 12 illustrates that the number of the U-turn portions are two, but the number of the U-turn portions may be more than two.

The effects or technical advantages of the ninth embodiment of the present invention are the same as those of the first embodiment of the present invention.

Tenth Embodiment

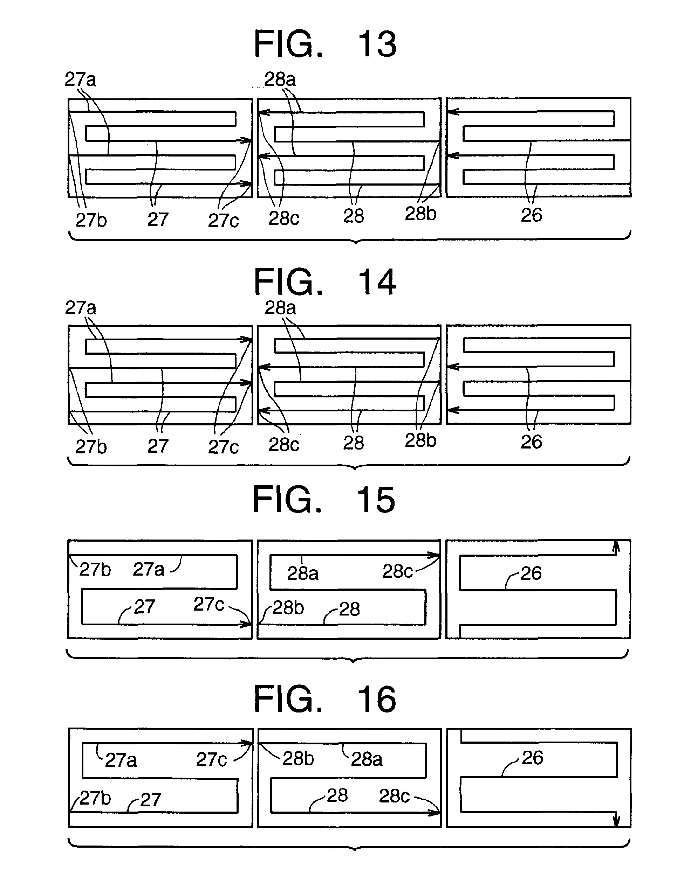

In the tenth embodiment of the present invention, as illustrated in FIG. 13, the fuel gas flow and the oxidant gas flow are counter to each other. The coolant flows in the same direction as the oxidant gas.

The gas passages include a plurality of groups of the fuel gas passages 27 and a plurality of groups of the oxidant gas passages 28. FIG. 13 illustrates the example where two groups of the fuel gas passages and two groups of the oxidant gas passages are provided. The number of groups may be more than two.

In each group, the fuel gas inlet 27b is located at the upper portion of the fuel gas passage 27a, and the fuel gas outlet 27c is located at the lower portion of the fuel gas passage 27a. The oxidant gas inlet 28b is located at the lower portion of the oxidant gas passage 28a, and the oxidant gas outlet 28c is located at the upper portion of the oxidant gas passage 28a.

The fuel gas inlet 27b and the oxidant gas inlet 28b are located at the opposite sides of the fuel cell having a substantially rectangular configuration. The fuel gas outlet 27c and the oxidant gas outlet 28c are located at the opposite sides of the rectangular fuel cell.

Each of the fuel gas passages 27a and the oxidant gas passages 28a includes a plurality of U-turn portions and is serpentine. FIG. 13 illustrates that the number of the U-turn portions is two, but the number of the U-turn portions may be more than two.

The effects or technical advantages of the tenth embodiment of the present invention are the same as those of the first embodiment of the present invention.

Eleventh Embodiment

In the eleventh embodiment, as illustrated in FIG. 14, the flow directions of the fuel gas, the oxidant gas and the coolant are reverse to those of the fuel gas, the oxidant gas and the coolant, respectively, in the tenth embodiment of the present invention.

In the eleventh embodiment of the present invention, the fuel gas flow and the oxidant gas flow are counter to each other. The coolant flows in the same direction as the oxidant gas.

The gas passages include a plurality of groups of the fuel gas passages 27 and a plurality of groups of the oxidant gas passages 28. FIG. 14 illustrates the example where two groups of the fuel gas passages and two groups of the oxidant gas passages are provided. The number of groups may be more than two.

In each group, the fuel gas inlet 27b is located at the lower portion of the fuel gas passage 27a, and the fuel gas outlet 27c is located at the upper portion of the fuel gas passage 27a. The oxidant gas inlet 28b is located at the upper portion of the oxidant gas passage 28a, and the oxidant gas outlet 28c is located at the lower portion of the oxidant gas passage 28a.

The fuel gas inlet 27b and the oxidant gas inlet 28b are located at the opposite sides of the fuel cell having a substantially rectangular configuration. The fuel gas outlet 27c and the oxidant gas outlet 28c are located at the opposite sides of the rectangular fuel cell.

Each of the fuel gas passages 27a and the oxidant gas passages 28a includes a plurality of U-turn portions. FIG. 14 illustrates that the number of the U-turn portions of each passage is two, but the number of the U-turn portions may be more than two.

The effects or technical advantages of the eleventh embodiment of the present invention are the same as those of the first embodiment of the present invention.

Twelfth Embodiment

In the twelfth embodiment of the present invention, as illustrated in FIG. 15, the fuel gas flow and the oxidant gas flow are parallel to each other and are directed in the same direction at the corresponding portions of the gas passages. The upstream portion of one gas passage 27a, 28a corresponds to the downstream portion of the other gas passage 28a, 27a.

The fuel gas inlet 27b is located at the upper portion of the fuel gas passage 27a, and the fuel gas outlet 27c is located at the lower portion of the fuel gas passage 27a. The oxidant gas inlet 28b is located at the lower portion of the oxidant gas passage 28a, and the oxidant gas outlet 28c is located at the upper portion of the oxidant gas passage 28a.

The fuel gas inlet 27b and the oxidant gas inlet 28b are located at the same side of the fuel cell having a substantially rectangular configuration and at positions spaced from each other so as not to interfere with each other. The fuel gas outlet 27c and the oxidant gas outlet 28c are located at the same side of the rectangular fuel cell and at positions spaced from each other so as not to interfere with each other.

The gas passages include one group of fuel gas passage 27 and one group of oxidant gas passage 28.

Each of the fuel gas passage 27a and the oxidant gas passage 28a includes a plurality of U-turn portions and is serpentine. FIG. 15 illustrates that the number of the U-turn portions of each passage is two, but the number of the U-turn portions may be more than two.

The effects or technical advantages of the twelfth embodiment of the present invention are the same as those explained in the effects or technical advantages due to the structures applicable to all embodiments of the present invention. More particularly, since the upstream portion of one gas passage corresponds to the downstream portion of the other gas passage, the wet portion of one gas and the dry portion of the other gas correspond to each other, so that water circulates in the fuel cell. Since the oxidant gas passage 28 and the coolant passage 26 are parallel over the entire lengths thereof, the oxidant gas is cooled by the coldest coolant near the oxidant gas inlet. As a result, the saturation vapor pressure decreases near the oxidant gas inlet and the drying-out of the membrane near the oxidant gas inlet is prevented. Since the oxidant gas is cooled near the oxidant gas outlet by the coolant which has risen in temperature, the saturation vapor pressure is raised near the oxidant gas outlet, and flooding near the oxidant gas outlet is effectively prevented.

Thirteenth Embodiment

In the thirteenth embodiment, as illustrated in FIG. 16, the flow directions of the fuel gas, the oxidant gas and the coolant are reverse to those of the fuel gas, the oxidant gas and the coolant, respectively, in the twelfth embodiment of the present invention. In the thirteenth embodiment, the fuel gas flow and the oxidant gas flow are directed in the same direction at the corresponding portions thereof. The upstream portion of one gas passage corresponds to the downstream portion of the other gas passage. The coolant flows in the same direction as the oxidant gas.

The fuel gas inlet 27b is located at the lower portion of the fuel gas passage 27a, and the fuel gas outlet 27c is located at the upper portion of the fuel gas passage 27a. The oxidant gas inlet 28b is located at the upper portion of the oxidant gas passage 28a, and the oxidant gas outlet 28c is located at the lower portion of the oxidant gas passage 28a.

The fuel gas inlet 27b and the oxidant gas inlet 28b are located at the same side of the fuel cell having a substantially rectangular configuration and at positions spaced from each other so as not to interfere with each other. The fuel gas outlet 27c and the oxidant gas outlet 28c are located at the same side of the rectangular fuel cell and at positions spaced from each other so as not to interfere with each other.

The gas passages include one group of fuel gas passage 27 and one group of oxidant gas passage 28.

Each of the fuel gas passage 27a and the oxidant gas passage 28a includes a plurality of U-turn portions and is serpentine. FIG. 16 illustrates that the number of the U-turn portions of each passage is two, but the number of the U-turn portions may be more than two.

The effects or technical advantages of the thirteenth embodiment of the present invention are the same as those of the twelfth embodiment of the present invention.

Fourteenth Embodiment

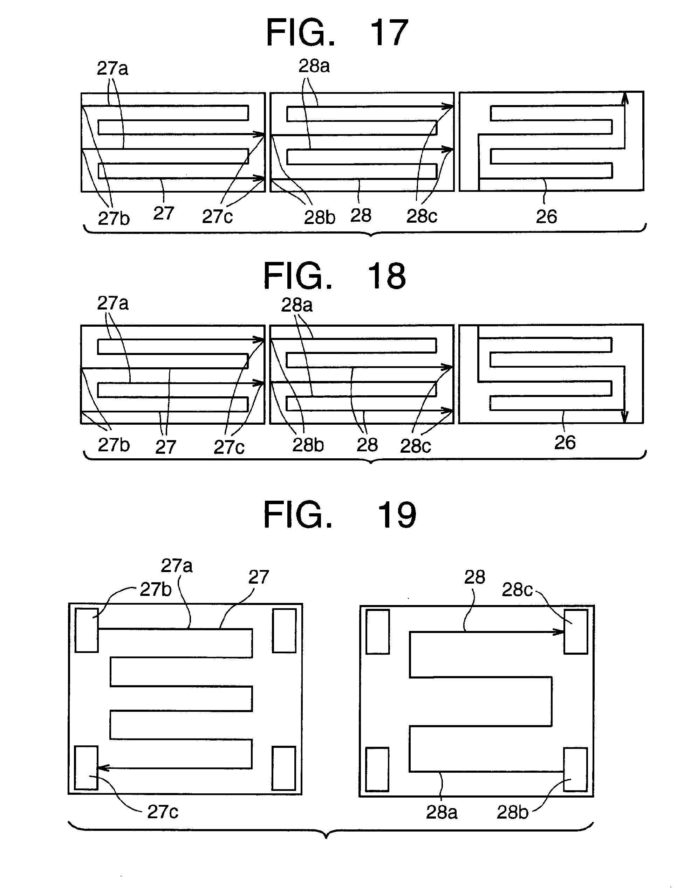

In the fourteenth embodiment of the present invention, as illustrated in FIG. 17, the fuel gas flow and the oxidant gas flow are directed in the same direction at the corresponding portions of the gas passages. The upstream portion of one gas passage 27a, 28a corresponds to the downstream portion of the other gas passage 28a, 27a.

The gas passages include a plurality of groups of the fuel gas passages 27a and a plurality of groups of the oxidant gas passages 28a. FIG. 17 illustrates the gas passages include two groups of the fuel gas passages 27a and two groups of the oxidant gas passages 28a. The number of the groups may be more than two.

In each group, the fuel gas inlet 27b is located at the upper portion of the fuel gas passage 27a, and the fuel gas outlet 27c is located at the lower portion of the fuel gas passage 27a. The oxidant gas inlet 28b is located at the lower portion of the oxidant gas passage 28a, and the oxidant gas outlet 28c is located at the upper portion of the oxidant gas passage 28a.

The fuel gas inlet 27b and the oxidant gas inlet 28b are located at the same side of the fuel cell having a substantially rectangular configuration and at positions spaced from each other so as not to interfere with each other. The fuel gas outlet 27c and the oxidant gas outlet 28c are located at the same side of the rectangular fuel cell and at positions spaced from each other so as not to interfere with each other.

Each of the fuel gas passages 27a and the oxidant gas passages 28a includes a plurality of U-turn portions and is serpentine. FIG. 17 illustrates that the number of the U-tum portions of each passage is two, but the number of the U-turn portions of each passage may be more than two.

The effects or technical advantages of the fourteenth embodiment of the present invention are the same as those of the twelfth embodiment of the present invention.

Fifteenth Embodiment

In the fifteenth embodiment, as illustrated in FIG. 18, the flow directions of the fuel gas, the oxidant gas and the coolant are reverse to those of the fuel gas, the oxidant gas and the coolant, respectively, in the fourteenth embodiment of the present invention.

The gas passages include a plurality of groups of the fuel gas passages 27a and a plurality of groups of the oxidant gas passages 28a. FIG. 18 illustrates the gas passages include two groups of the fuel gas passages 27a and two groups of the oxidant gas passages 28a. The number of the groups may be more than two.

In each group, the fuel gas inlet 27b is located at the lower portion of the fuel gas passage 27a, and the fuel gas outlet 27c is located at the upper portion of the fuel gas passage 27a. The oxidant gas inlet 28b is located at the upper portion of the oxidant gas passage 28a, and the oxidant gas outlet 28c is located at the lower portion of the oxidant gas passage 28a.

The fuel gas inlet 27b and the oxidant gas inlet 28b are located at the same side of the fuel cell having a substantially rectangular configuration and at positions spaced from each other so as not to interfere with each other. The fuel gas outlet 27c and the oxidant gas outlet 28c are located at the same side of the rectangular fuel cell and at positions spaced from each other so as not to interfere with each other.

Each of the fuel gas passages 27a and the oxidant gas passages 28a includes a plurality of U-turn portions and is serpentine. FIG. 18 illustrates that the number of the U-turn portions of each passage is two, but the number of the U-turn portions of each passage may be more than two.

The effects or technical advantages of the fifteenth embodiment of the present invention are the same as those of the twelfth embodiment of the present invention.

Sixteenth Embodiment

In the sixteenth embodiment of the present invention, as illustrated in FIG. 19, each of the fuel gas passage 27a and the oxidant gas passage 28 includes a plurality of U-turn portions and is serpentine. The number of the U-turn portions of the fuel gas passage 27a is greater than that of the U-turn portions of the oxidant gas passage 28a. Due to this structure, the fuel gas passage 27a is longer than the oxidant gas passage 28a.

The fuel gas inlet 27b and the fuel gas outlet 27c are located at the same side of the fuel cell having a substantially rectangular configuration and at positions spaced from each other so as not to interfere with each other. The oxidant gas inlet 28b and the oxidant gas outlet 28c are located at the same side of the rectangular fuel cell and at positions spaced from each other so as not to interfere with each other. The side at which the fuel gas inlet 27b and outlet 27c are located and the side at which the oxidant gas inlet 28b and outlet 28c are located are opposite to each other.

In the sixteenth embodiment of the present invention, since the length of the fuel gas passage 27a is longer than that of the oxidant gas passage 28a by providing more U-turn portions in the fuel gas passage 27a than in the oxidant gas passage 28a, the flow speed of the fuel gas is higher than that of the oxidant gas and the thickness of the boundary layer of the fuel gas becomes small so that water contained in the membrane 11 is likely to be evaporated into the fuel gas. As a result, the amount of product water permeating through the membrane from the downstream portion of the oxidant gas passage 28a to the fuel gas passage 27a increases, and the humidity of the fuel gas increases. Due to the increased humidity of the fuel gas, drying-out of the membrane 11 is more suppressed.

Seventeenth Embodiment

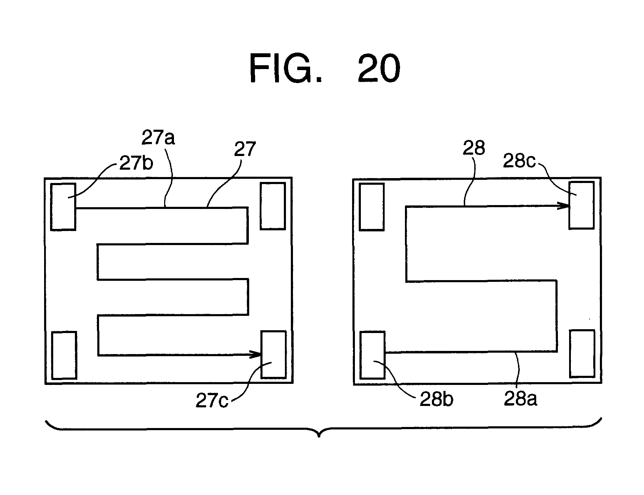

In the seventeenth embodiment of the present invention, as illustrated in FIG. 20, each of the fuel gas passage 27a and the oxidant gas passage 28 includes a plurality of U-turn portions and is serpentine. The number of the U-turn portions of the fuel gas passage 27a is greater than that of the U-turn portions of the oxidant gas passage 28a. Due to this structure, the fuel gas passage 27a is longer than the oxidant gas passage 28a.

The fuel gas inlet 27b and the fuel gas outlet 27c are located at opposite sides of the fuel cell having a substantially rectangular configuration. The oxidant gas inlet 28b and the oxidant gas outlet 28c are located at opposite sides of the rectangular fuel cell. The fuel gas inlet 27b and the oxidant gas inlet 28b are located at the same side of the rectangular fuel cell.

Effects or technical advantages of the seventeenth embodiment of the present invention are the same as those of the sixteenth embodiment of the present invention. More particularly, since the length of the fuel gas passage 27a is longer than that of the oxidant gas passage 28a by providing more U-turn portions in the fuel gas passage 27a than in the oxidant gas passage 28a, the flow speed of the fuel gas is higher than that of the oxidant gas and the thickness of the boundary layer of the fuel gas becomes small so that water contained in the membrane 11 is likely to be evaporated into the fuel gas. As a result, the amount of product water permeating through the membrane from the downstream portion of the oxidant gas passage 28a to the fuel gas passage 27a increases, and the humidity of the fuel gas increases. Due to the increased humidity of the fuel gas, drying-out of the membrane 11 is more suppressed.

A fuel cell (10) wherein (a) an MEA and a separator (18) are layered in a direction perpendicular to gravity, and (b) a fuel gas inlet (27b), a fuel gas outlet (27c) and a fuel gas passage (27a), and an oxidant gas inlet (28b), an oxidant gas outlet (28c) and an oxidant gas passage (28a) are arranged such that a humidity distribution of fuel gas at an anode (14) and a humidity distribution of oxidant gas at a cathode (17) are counter to each other. The fuel cell (10) has a coolant passage (26), and the humidity distribution and a temperature distribution at the cathode (17) correspond to each other. Each gas passage (27a, 28a) has a concave portion (29) at a lower wall thereof.

## Claims

1. A polymer electrolyte fuel cell (10) comprising:

    a membrane-electrode assembly (MEA) including an electrolyte membrane (11), an anode (14) provided on one side of the electrolyte membrane (11), and a cathode (17) provided on another side of the electrolyte membrane (11); and
    a separator (18) including a fuel gas inlet (27b), a fuel gas outlet (27c), and a fuel gas passage (27a) formed therein, and an oxidant gas inlet (28b), an oxidant gas outlet (28c), and an oxidant gas passage (28a) formed therein,

    wherein (a) said MEA and said separator (18) are layered in a direction perpendicular to a gravity direction so that said fuel gas passage (27a) and said oxidant gas passage (28b) are disposed in a vertical plane, and (b) said fuel gas inlet (27b), said fuel gas outlet (27c) and said fuel gas passage (27a), and said oxidant gas inlet (28b), said oxidant gas outlet (28c) and said oxidant gas passage (28a) are arranged such that a humidity distribution of fuel gas at said anode (14) and a humidity distribution of oxidant gas at said cathode (17) are counter to each other.

2. A fuel cell (10) according to claim 1, wherein said fuel gas passage (27a) has a first groove depth ($h_1$) and said oxidant gas passage (28a) has a second groove depth ($h_2$), the first groove depth ($h_1$) being smaller than the second groove depth ($h_2$).

3. A fuel cell (10) according to claim 1, further comprising:

    a coolant passage (26), and

    wherein the humidity distribution and a temperature distribution at said cathode (17) correspond to each other.

4. A fuel cell (10) according to claim 1, wherein each of said fuel gas passage (27a) and said oxidant gas passage (28a) extends horizontally or obliquely downwardly in a downstream direction.

5. A fuel cell (10) according to claim 1, wherein each of said fuel gas passage (27a) and said oxidant gas passage (28a) has a lower wall near the gas outlet (27c, 28c), and a concave portion (29) is formed in the lower wall.

6. A fuel cell (10) according to claim 1, wherein said fuel gas passage (27a) and said oxidant gas passage (28a) are arranged in the fuel cell (10) such that a fuel gas flow and an oxidant gas flow are counter to each other and parallel to each other.

7. A fuel cell (10) according to claim 1, wherein said fuel gas passage (27a) and said oxidant gas passage (28a) are arranged in the fuel cell (10) such that a fuel gas flow and an oxidant gas flow are parallel to each other and are directed in the same direction, and such that an upstream portion of said fuel gas passage (27a) corresponds to a downstream portion of said oxidant gas passage (28a) and a downstream portion of said fuel gas passage (27a) corresponds to an upstream portion of said oxidant gas passage (28a).

8. A fuel cell (10) according to claim 1, wherein said fuel gas inlet (27b) is located at an upper portion of said fuel gas passage (27a), said oxidant gas inlet (28b) is located at an upper portion of said oxidant gas passage (28a), said fuel gas outlet (27c) is located at a lower portion of said fuel gas passage (27a), and said oxidant gas outlet (28c) is located at a lower portion of said oxidant gas passage (28a).

9. A fuel cell (10) according to claim 1, wherein one group of said fuel gas passage (27a) and one group of said oxidant gas passage (28a) are provided in one said fuel cell (10).

10. A fuel cell (10) according to claim 1, wherein a plurality of groups of said fuel gas passages (27a) and a plurality of groups of said oxidant gas passages (28a) are provided in one said fuel cell (10).

11. A fuel cell (10) according to claim 1, wherein each of said fuel gas passage (27a) and said oxidant gas passage (28a) has no U-turn portion.

12. A fuel cell (10) according to claim 1, wherein each of said fuel gas passage (27a) and said oxidant gas passage (28a) has at least one U-turn portion.

13. A fuel cell (10) according to claim 1, wherein said fuel gas passage (27a) is longer than said oxidant gas passage (28a) by providing more U-turn portions in said fuel gas passage (27a) than in said oxidant gas passage (28a).

# FIG. 1

# FIG. 2

# FIG. 3

# FIG. 4

# FIG. 5

$h_1 < h_2$

# FIG. 6

# FIG. 7

# FIG. 8

## FIG. 9

27b
28c

27c        27a
27b
28b        28a
28c

27c        27        28b        28        26

## FIG. 10

27c
28b

27b        27a
27c
28c        28a
28b

27b        27        28c        28        26

## FIG. 11

27b
28c

27a        27        27c        28a        28        28b        26

## FIG. 12

27c
28b

27b        27a        27        28c        28a        28        26

# FIG. 13

27a

28a

27b 27 27c 28c 28 28b 26

# FIG. 14

27a

28a

27b 27 27c 28c 28 28b 26

# FIG. 15

27b 27a

28a 28c

26

27 27c

28b 28

# FIG. 16

27a 27c

28b 28a

26

27b 27

28 28c

# FIG. 17

# FIG. 18

# FIG. 19

# FIG. 20